# EUROPÄISCHE PATENTANMELDUNG

(11) **EP 2 806 390 A1**
(43) Veröffentlichungstag der Anmeldung: **26.11.2014**
(21) Anmeldenummer: 13002683.4
(22) Anmeldetag: 22.05.2013
(51) Int. Cl.: G06Q 30/02

(54) **Verfahren und Einrichtung zur Steuerung der Ausgabe produktbezogener Werbebotschaften von Kunden in Verkaufsanlagen**

(71) Anmelder: Boos, Herbert, 65779 Kelkheim (DE); Meyer, Florian, 50999 Köln (DE)
(72) Erfinder: Boos, Herbert, 65779 Kelkheim (DE); Meyer, Florian, 50999 Köln (DE)
(74) Vertreter: Gallo, Wolfgang

(57) **Zusammenfassung**

Verfahren und Einrichtung zur Steuerung der Ausgabe von Werbebotschaften in Verkaufsanlagen, wo über innerhalb und außerhalb der Verkaufsanlage angeordnete Erfassungsmittel Randbedingungsdaten wie Wetter und Temperaturdaten erfaßt und mit tatsächlichen Verkäufen von durch Werbebotschaften beworbenen Produkten korreliert werden und die Ausgabe der Werbebotschaften in Abhängigkeit der Ergebnisse gezielt beim Vorherrschen der ermittelten günstigsten Randbedingungen ausgegeben werden.

## Beschreibung

Die Erfindung betrifft ein Verfahren und eine Einrichtung zur Steuerung der Ausgabe von Werbebotschaften in Verkaufsanlagen zum Zwecke der Optimieren der Effizienz der Ansprache von Kunden mit solchen Werbebotschaften.

Es ist üblich, dass in Verkaufsanlagen wie beispielsweise Supermärkten die Kunden, die sich gerade im Markt befinden, mit Werbebotschaften angesprochen werden, indem beispielsweise in gewissen Abständen Werbedurchsagen über Lautsprecher erfolgen, die auf gerade aktuelle Aktionen oder Sonderangebote des Marktes hinweisen. Üblich sind auch Werbebotschaften, die Kunden in Verkaufsanlagen produktbezogen in Gestalt von Videodarbietungen auf Bildschirmen vermittelt werden, was häufig in Baumärkten und ähnlichen Verkaufsanlagen der Fall ist, wo Kunden durch Videos angesprochen werden sollen, die ein bestimmtes Produkt wie beispielsweise ein Werkzeug und dessen Handhabung darstellen. Solche Werbebotschaften laufen teils kontinuierlich, teils auch beim Vorbeigehen eines Kunden, das durch einen Sensor erfaßt wird und das Abspielen der Werbebotschaft einleitet, oder nur nach Abruf durch den Kunden.

Es ist auch schon bekannt, Kunden dadurch in einer Verkaufsanlage zu führen und gezielt mit Werbebotschaften anzusprechen, dass die Kunden im Eingangsbereich einer Verkaufsanlage beispielsweise an einem Bildschirm-Terminal eingeben können, für welche Warenkategorie sie sich bei dem Einkauf besonders interessieren, und die dann anhand einer Kennzeichnung, beispielsweise durch einen im Einkaufswagen eingebauten Transponder, von einer Computeranlage erfaßt und an ausgewählten Stellen innerhalb des Verkaufsbereichs anhand dieser Kennzeichnung erkannt und gezielt mit Werbebotschaften angesprochen und auf Produkte hingewiesen werden können. Das ist allerdings aufwendig und erfordert ein aktives Zutun des Kunden, was jedoch realistischerweise nur dort erwartet werden kann, wo der Kunde von vornherein mit einem bestimmten Einkaufsziel erscheint, beispielsweise in Baumärkten oder Gartencentern. Im Bereich von Lebensmittel- und Getränkemärkten ist eine derartige Kundenansprache kaum effizient und erfolgversprechend.

Aufgabe der Erfindung ist es, ein Verfahren und eine Einrichtung zu schaffen, um die Effizienz von produktbezogenen Werbebotschaften an Kunden zu steigern und auch zu überprüfen, um Werbebotschaften zur Förderung des Verkaufserfolgs dem Kunden gezielter präsentieren zu können.

Diese Aufgabe wird erfindungsgemäß durch das im unabhängigen Verfahrensanspruch 1 angegebene Verfahren und die im unabhängigen Einrichtungsanspruch 8 angegebene Einrichtung gelöst.

Die Erfindung geht von der Überlegung aus, dass zur Effizienzsteigerung eine bessere Anpassung abzugesetztender Werbebotschaften an die jeweilige Disposition und Befindlichkeit des Kunden sinnvoll ist. Im Gegensatz zu wahllos verbreiteten Werbebotschaften, die Kunden nur generell auf momentan vorhandene Sonderangebote oder ähnliches hinweisen, oder Kunden nur aufgrund ihres Erscheinens am jeweiligen Ort in der Verkaufsanlage ein bestimmtes Produkt vorstellen, zielt die Erfindung darauf ab, eine Möglichkeit zu schaffen, die gegenwärtige Disposition des Kunden und weitere Randbedingungen einzubeziehen und in Abhängigkeit davon eine Werbebotschaft gezielt so zu platzieren, dass der Kunde mit der Werbebotschaft dann erreicht werden kann, wenn er besonders für den Kauf eines bestimmten Produkts disponiert sein könnte.

Dies umfasst erfindungsgemäß das Erfassen und Sammeln von Daten, welche die Disposition des Kunden erfahrungsgemäß beeinflussen. Dazu gehören beispielsweise Wochentag, Tageszeit und Wetterlage. Am frühen Werktagmorgen wird ein möglicherweise unausgeschlafener Kunde, der sich zudem in Eile befindet, weniger empfänglich für eine Werbebotschaft sein, als am entspannten Feierabend. Bei kaltem Wetter wird sich der Verkauf von Erfrischungsgetränken oder Speiseeis weniger fördern lassen als bei durstigem Sommerwetter.

Zu den Umständen, welche die Empfänglichkeit eines Kunden für Werbebotschaften beeinflussen können, gehören auch die momentanen örtlichen Verhältnisse in der Verkaufsanlage. An Stellen, wo sich momentan viele Kunden aufhalten und möglicherweise Gedränge herrscht, ist das Ansprechen von Kunden, insbesondere über Videobotschaften, wenig effizient, da sie dann kaum wahrgenommen werden können.

Erfindungsgemäß ist deshalb vorgesehen, äußere Daten einer Einkaufssituation zu erfassen, um die Befindlichkeit und Disposition des Kunden abschätzen zu können, und zugleich eine Kontrolle des Kundenverhaltens vorzunehmen. Dies kann dadurch geschehen, dass dieser beim Betreten der Verkaufsanlage in einem Eingangs- oder Check-In-Bereich in irgendeiner Weise mit einem ihn für die Dauer des Einkaufs individualisierenden Kennzeichen versehen wird, beispielsweise durch eine erfassbare Kennung eines Einkaufswagens oder Einkaufskorbs, oder durch Aushändigen eines eine Kennung aufweisenden Gutscheins, um nur wenige Beispiele zu nennen. Wenn der Kunde so, wenngleich als anonymes Individuum, so erfaßt wird, und ihm die Umgebungsdaten zum Zeitpunkt seines Einkaufs zugeordnet werden, und dann auch noch das Ergebnis seines Einkaufs, das an der Kasse erfaßt werden kann, zugeordnet wird, läßt sich feststellen, ob und in welchem Umfang eine dem Kunden im Verlaufe seines Einkaufs vermittelte produktbezogene Werbebotschaft zu einem Verkaufserfolg geführt hat. Damit läßt sich auch ermitteln, ob an bestimmten Orten der Verkaufsanlage sich gerade eine größere Kundenansammlung befindet oder nur einzelne Kunden unterwegs sind.

Wenn solche Daten über einen Zeitraum mit unterschiedlichen Umgebungsbedingungen und einer Vielzahl von in der genannten Weise individualisierten Kunden ermittelt worden sind, kann durch entsprechende Auswertung ermittelt werden, unter welchen äußeren Bedingungen eine ein bestimmtes Produkt betreffende Werbebotschaft die Kunden am ehesten erreicht.

Die Wertigkeit einer solchen Auswertung kann dadurch gesteigert werden, dass die Daten nicht nur eines Supermarkts gesammelt und ausgewertet werden, sondern die Erfassung und Auswertung solcher Daten von einer Vielzahl von Supermärkten durch eine zentrale Einrichtung erfolgt und dadurch noch stärker objektiviert wird.

Anhand der Auswertungen kann dann eine Steuerung des Absetzens produktbezogener Werbebotschaften an Kunden derart erfolgen, dass bei Vorliegen der jeweils günstigen äußeren Umgebungseigenschaften wie Wetterlage, Wochentag und Tageszeit, und Temperatur dem Kunden das jeweils geeignete Produkt besonders vorgeschlagen wird und dadurch der Verkauf bestimmter Produkte zu den Zeitpunkten besonders gefördert wird, zu denen die dafür günstigsten Bedingungen herrschen.

Da die Verkaufsergebnisse an der Kasse jeweils miterfasst werden, kann mit dem erfindungsgemäßen Verfahren und der erfindungsgemäßen Einrichtung in gleicher Weise wie bei einem technischen Regelkreis, das Steuersignal (= Werbebotschaft) unter Kontrolle des Outputs (=Verkaufserfolg) optimiert werden.

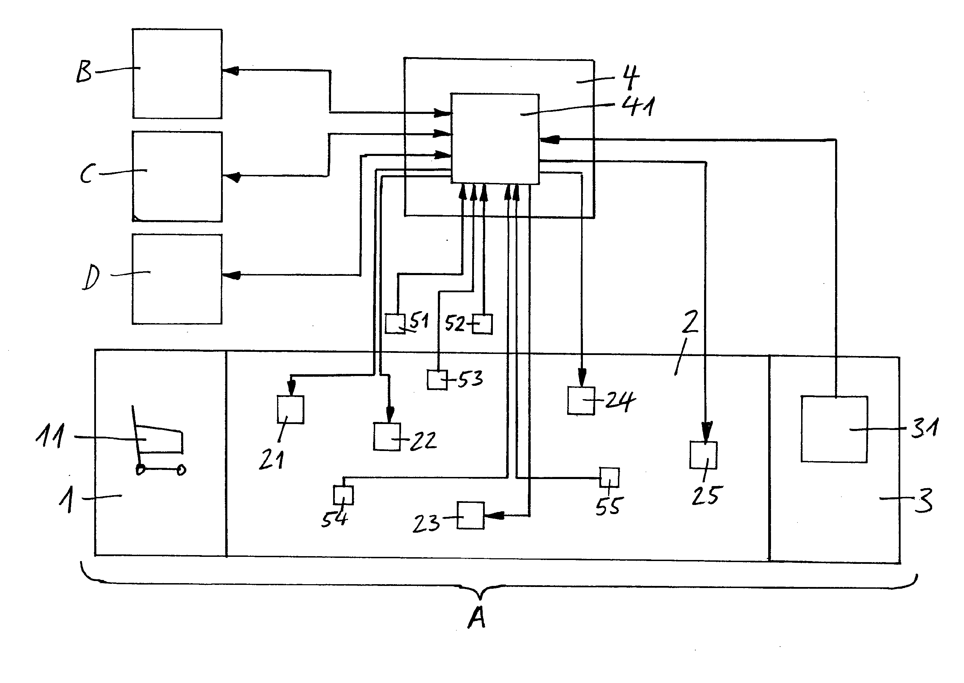

Die Erfindung wird nachstehend unter Bezugnahme auf die anliegende schematische Zeichnung mehr im einzelnen erläutert. Die Zeichnung stellt eine Art Flussdiagramm des Ablaufs des erfindungsgemäßen Verfahrens dar, woraus auch die zu dessen Durchführung erforderliche Einrichtung resultiert.

Die Zeichnung zeigt vier Hauptblöcke, nämlich einen Eingangs- oder Check-In-Bereich 1 einer Verkaufsanlage, beispielsweise eines Supermarkts, einen Verkaufsbereich 2 der Verkaufsanlage, wobei es sich um den Verkaufsraum oder die Gesamtheit von mehreren Verkaufsräumen handeln kann, und einen Kassenbereich 3, sowie einen zentralen Datenverarbeitungsbereich 4.

Funktionell verkörpert der Block 1 den Individualisierungsbereich zur Kundenindividualisierung, der Block 2 verkörpert den Aktionsbereich zur Kundenansprache, der Block 3 verkörpert den Nachweisbereich zur Kaufnachweiszuordnung, und der Block 4 verkörpert den Bereich zur Erfassung, Aufzeichnung, Speicherung, Anreicherung und Verarbeitung von Daten und zur Steuerung von Werbebotschaften.

Die Blöcke 1 bis 3 sind typischerweise Bereiche einer Verkaufsanlage, wie beispielsweise eines Supermarkts, eines Kaufhauses oder eines Marktes. Der Block 4, der Datenverarbeitungsbereich, kann einer einzelnen Verkaufsanlage allein zugeordnet sein, kann aber auch einer Mehrzahl von Verkaufsanlagen zugeordnet sein.

Im Eingangsbereich 1 findet die Individualisierung eines Kunden statt, indem dieser für die Dauer seines Aufenthalts in der Verkaufsanlage mit einem Kennzeichen versehen wird, das es ermöglicht, diesem Kunden sein Einkaufsverhalten und seine tatsächlich getätigten Einkäufe während seines Einkaufaufenthalts in der Verkaufsanlage zuordnen zu können. Der Kunde bleibt dabei freilich anonym. Seine Kennzeichnung für die Dauer des Einkaufs kann dadurch erfolgen, dass er sich einen Einkaufswagen 11 aus einem Magazin nimmt, und der Einkaufswagen mit einer Kennzeichnung versehen ist. Beispielsweise kann der Einkaufswagen nummeriert sein, so dass im Kassenbereich 3 die Nummer des Einkaufswagens vom Kassenpersonal erfasst und den Kassenbondaten zugeordnet werden kann. Vorteilhafterweise ist eine Kennzeichnung mittels Strichcodes oder durch einen Transponder am Einkaufswagen vorgesehen, um ein elektronisches Erfassen der Kennzeichnung nicht nur im Kassenbereich 3, sondern auch an ausgewählten Stellen der Verkaufsanlage zu ermöglichen. Denkbar sind aber auch andere Arten einer Kennzeichnung, wie beispielsweise das Aushändigen eines mit der Kennzeichnung versehenen Gutscheins oder dergleichen, den der Kunde an der Kasse gegen einen gewissen Vorteil abgeben kann.

Die dem Kunden zugeteilte Kennzeichnung kann gleichzeitig an den Datenverarbeitungsbereich 4 übermittelt werden, beispielsweise aufgrund der Entnahme eines Einkaufswagens 11 aus einem Einkaufswagenmagazin durch den Kunden, wenn der Wagen 11 mit einer elektronisch lesbaren Kennzeichnung versehen ist. Dann kann auch der Zeitpunkt der Kennzeichnung erfasst werden.

Dem Datenverarbeitungsbereich 4 werden außerdem Umgebungsdaten übermittelt, wie beispielsweise Wetter, Luftdruck, Luftfeuchtigkeit, Außentemperatur, Temperatur innerhalb der Verkaufsanlage, oder andere Daten, die für das Kaufverhalten von Kunden irgendeine Relevanz haben könnten. Diese Daten werden entweder automatisch, beispielsweise durch eine Meßgeräte 51, 52, 53 oder dergleichen eine Datenverarbeitungsanlage 41 im Datenverarbeitungsbereich eingegeben oder in Gestalt irgendwelcher externer Meldungen eingespeist oder in gewissen Zeitabständen manuell eingegeben. Wochentag, Datum, und Tageszeit werden ohnehin in der Datenverarbeitungseinrichtung 41 bereitgehalten und zugeordnet.

Auch örtliche Verhältnisse innerhalb der Verkaufsanlage wie beispielsweise Kundendichte oder Geräuschpegel können durch geeignete Einrichtungen 54, 55 erfaßt und an den Datenverarbeitungsbereich 4 übermittelt werden.

In dem den Aktionsbereich bildenden Einkaufsbereich 2 erfolgt insbesondere die Ansprache des Kunden mit Werbebotschaften, deren Ausgabe von der Datenverarbeitungsanlage 41 im Datenverarbeitungsbereich 4 gesteuert wird. Diese Werbebotschaften können Audiobotschaften, also Ansagen, audio-visuelle Botschaften, also Botschaften in Bild und Ton, wie beispielsweise Videoclips, oder Diashows mit begleitendem Text, oder nur visuelle Botschaften, beispielsweise Darstellungen über Bildschirme, sein. Diese Werbebotschaften können über jeweils zweckent- sprechende Ausgabemedien 21, 22, 23, 24, 25 wie im Verkaufsbereich verteilte Lautsprecher, örtlich in der Nähe eines bestimmten beworbenen Produkts angeordnete Lautsprecher, Videobildschirme oder angestrahlte Bildwände erfolgen. Eine derartige Werbebotschaft kann aber auch lediglich im momentanen hervorgehobenem Präsentieren eines bestimmten Produkts bestehen, beispielsweise, indem ein bestimmtes Produkt durch Lichteffekte wie beispielsweise blitzlichtartiges Anblinken mit einem Scheinwerfer, oder Beleuchten mit farbigem Licht, besonders herausgehoben wird.

Diese Werbebotschaften können entweder generell abgesetzt werden oder gezielt beim Auftauchen eines Kunden bei dem jeweils beworbenen Produkt ausgelöst werden, um so die besondere Aufmerksamkeit des Kunden zu erregen.

Die besonders effektive, aber auch etwas aufwendigere Möglichkeit der unmittelbaren gezielten Kundenansprache beim Erscheinen eines Kunden bei einem beworbenen Produkt kann entweder dadurch gesteuert werden, dass die individualisierende Kennzeichnung des Kunden erfasst wird, beispielsweise über einen am Einkaufswagen 11 angeordneten Transponder, womit dann im Datenverarbeitungsbereich 4 auch erfassbar und registrierbar ist, welcher Kunde tatsächlich das beworbene Produkt passiert hat, oder das Erscheinen eines Kunden kann mit Lichtschranken oder elektronischer Erfassung der Anwesenheit eines metallenen Einkaufswagens erfasst werden.

Im Kassenbereich 3 werden die vom Kunden getätigten Einkäufe an der Registrierkasse 31 erfasst und dem individualiserten Kunden zugeordnet. Die Kennzeichnung des Kunden, beispielsweise über den Einkaufswagen 11, kann dabei im Kassenbereich 3 wiederum elektronisch und automatisch erfasst werden. Möglich ist aber auch eine Erfassung durch die Kassiererin, indem sie beispielsweise eine am Einkaufswagen angebrachte Nummer abliest und eingibt. Die von der Registrierkasse erfassten Einkäufe werden an den Datenverarbeitungsbereich 4 übermittelt und dem Kunden zugeordnet. Dabei können im Datenverarbeitungsbereich aus den übermittelten Einkaufsdaten nur die Daten der interessierenden gerade beworbenen Produkte herausgefiltert werden, oder die Registrierkasse kann schon so programmiert oder gesteuert sein, dass sie nur die Daten bezüglich der gerade beworbenen Produkte an den Datenverarbeitungsbereich übermittelt.

Die beschriebene Individualisierung der Kunden ist zwar vorteilhaft und zweckmäßig, aber bei einer vereinfachten Version des erfindungsgemäßen Konzepts nicht unbedingt notwendig. Hingegen ist die Erfassung der Verkaufserfolge an der Kasse von zentraler Bedeutung, damit die Verkaufszahlen eines bestimmten beworbenen Produkts oder mehrerer beworbener Produkte jeweils mit den herrschenden Randbedingungen korreliert und dadurch abgeleitet werden kann, zu welchen Zeitpunkten und unter welchen äußeren Bedingungen die Kundenansprache zur Bewerbung eines bestimmten Produkts besonders effektiv ist und den Verkaufserfolg am meisten fördert. Die Wertigkeit und Aussagekraft ist dabei besonders hoch, wenn Daten einer Mehrzahl von Verkaufsanlagen von einer zentralen Datenverarbeitungsbereich 4 erfaßt und ausgewertet werden.

Im Datenverarbeitungsbereich werden die Daten gesammelt, über Zeiträume angereichert und ausgewertet.

Bei dem gezeigten Ausführungsbeispiel ist der Datenverarbeitungsbereich 4 einer Mehrzahl von Verkaufsanlagen zugeordnet. Die in der schematischen Zeichnung dargestellten Blöcke 1, 2 und 3 bilden eine Verkaufsanlage A. Weitere Verkaufsanlagen, die mit dem gemeinsamen Datenverarbeitungsbereich 4 verbunden sind, sind als Blöcke B, C, D ... N bezeichnet.

Die Auswertung der von den verschiedenen Verkaufsanlagen gelieferten Randbedingungs- und Verkaufserfolgsdaten erfolgt in der Weise, dass die Verkaufsdaten mit dem jeweiligen Randbedingungsdaten korreliert werden. Das bedeutet, dass Verkaufsdaten, denen jeweils momentan herrschende und erfaßte Randbedingungen zugeordnet sind, in Zuordnung zu einer jeweiligen Randbedingungskategorie, also einen bestimmten Temperaturbereich, einen bestimmten Zeitfenster im Tageslauf, einen bestimmten Wochentag, einen bestimmten Wetter wie beispielsweise Sonnenschein oder Regen, oder dgl. aufaddiert wird. Da solche Randbedingungskategorien wie bestimmte Umgebungstemperaturbereiche, Raumtemperaturbereiche, Wetterlagen, Tageszeitfenster usw. sich regelmäßig oder gelegentlich wiederholen, kann durch Sammeln solcher Daten über einen gewissen Zeitraum eine klare Zuordnung getroffen werden, zu welchen Tageszeiten, zu welchen Temperaturbedingungen, zu welchen Wetterbedingungen oder dgl. sich ein bestimmtes Produkt am erfolgreichsten verkaufen läßt.

Dementsprechend kann die Aussage von Werbebotschaften nach solchermaßen ermittelten Effizienz-Optimierungswerten für jeweils zu bewerbende Produkte gezielter abgesetzt werden.

In wirtschaftlicher Hinsicht führt die Anwendung des erfindungsgemäßen Konzepts zu einer erheblichen Steigerung von Produktumsätzen.

## Patentansprüche

1. Verfahren zur Steuerung der Ausgabe von Werbebotschaften in Verkaufsanlagen, wobei produktbezogene Werbebotschaften zur bedarfsweisen Verwendung bereitgestellt und Ausgabemedien zur Ausgabe der Werbebotschaften in der Verkaufsanlage bereitgehalten werden, mit folgenden Schritten:
- Erfassen von Randbedingungsdaten wie Wochentag, Tageszeit, Außentemperatur, Verkaufsraumtemperatur, Luftdruck, Luftfeuchtigkeit und Wetterlage während der Verkaufszeiten, und zeitweises Speichern dieser Daten,
- Ausgeben produktbezogener Werbebotschaften in der Verkaufsanlage zur Bewerbung bestimmter ausgewählter Produkte,
- Erfassen der tatsächlichen Verkäufe der beworbenen Produkte unter Erfassung der Verkaufszeiten,
- Zuordnen der erfaßten, zum jeweiligen Verkaufszeitpunkt herrschenden Randbedingungsdaten zum jeweiligen Verkauf der beworbenen Produkte,
- Sammeln und Speichern der Verkaufsdaten mit jeweils zugeordneten Randbedingungsdaten,
- Auswerten der gesammelten Verkaufsdaten und Ermitteln der Randbedingungen, bei deren Vorherrschen Verkäufe der beworbenen Produkte gehäuft auftreten, und
- Steuerung der Ausgabe der das jeweilige Produkt betreffenden Werbebotschaften bevorzugt oder verstärkt jeweils während des Vorherrschens der als verkaufsstark ermittelten Randbedingung.

2. Verfahren nach Anspruch 1, wobei das Sammeln und Auswerten der Verkaufsdaten mit jeweils zugeordneten Randbedingungsdaten kumulativ über einen längeren Zeitraum erfolgt.

3. Verfahren nach Anspruch 1 oder 2, wobei die Verfahrensschritte zentral für eine Mehrzahl von Verkaufsanlagen durchgeführt werden.

4. Verfahren nach einem der Ansprüche 1 bis 3, wobei das Erfassen der tatsächlichen Verkäufe der beworbenen Produkte und der Erfassung der Verkaufszeiten jeweils im Kassenbereich der Verkaufsanlage anhand der Registrierkassendaten erfolgt.

5. Verfahren nach einem der Ansprüche 1 bis 4, wobei den Kunden in einem Eingangsbereich der Verkaufsanlage eine individualisierende Kennzeichnung zugeordnet wird, beispielsweise in Gestalt einer technisch lesbaren oder erfaßbaren Kennung eines entnommenen Einkaufswagens, und diese Kennzeichnung auch den erfaßten und gesammelten Verkaufsdaten zugeordnet wird.

6. Verfahren nach Anspruch 5, wobei das Erscheinen des mit einer individualisierenden Kennzeichnung versehenen Kunden an ausgewählten Orten der Verkaufsanlage technisch erfaßt und in Abhängigkeit davon eine Aussage einer Werbebotschaft zur individualisierten Ansprache des Kunden ausgelöst wird.

7. Verfahren nach einem der Ansprüche 1 bis 6, wobei außerdem Parameter wie beispielsweise momentane Kundendichte oder Geräuschpegel im Bereich von Ausgabemedien in der Verkaufsanlage erfaßt und bei der Steuerung der Ausgabe der Werbebotschaften berücksichtigt werden.

8. Einrichtung zur Steuerung der Ausgabe von Werbebotschaften in Verkaufsanlagen zur Ausführung des Verfahrens nach einem der Ansprüche 1 bis 8, mit einer Datenverarbeitungsanlage (41) mit Speichermitteln zur Speicherung produktbezogener Werbebotschaften, und mit programmierbaren Mitteln zur Steuerung der Ausgabe dieser Werbebotschaften an in der Verkaufsanlage platzierten Ausgabemedien (21, 22, 23, 24, 25),
weiter mit Erfassungsmitteln (51, 52, 53) zur Erfassung von Randbedingungsdaten wie Außentemperatur, Verkaufsraumtemperatur, Luftdruck, Luftfeuchtigkeit, und Wetterlage und zur Übermittlung derselben an die Datenverarbeitungsanlage (41) zum zeitweisen Speichern solcher Randbedingungsdaten,
ferner mit Mitteln (31) zur Erfassung von Verkaufsdaten der mit den Werbebotschaften beworbenen Produkte aus Registrierkassendaten und zum Zuordnen von zum Erfassungszeitpunkt jeweils herrschenden Randbedingungsdaten,
weiter mit Mitteln zum Sammeln, Speichern und Korrelieren der Produktverkaufsdaten mit zugeordneten Randbedingungsdaten zur Ermittlung der Randbedingungen, bei deren Vorherrschen Verkäufe eines durch Werbebotschaften beworbenen bestimmten Produkte gehäuft auftreten,
und mit Mitteln zur Steuerung der Ausgabe von ein bestimmtes Produkt bewerbenden Werbebotschaften immer dann, wenn Randbedingungen herrschen, für welche eine Häufung der Verkäufe des betreffenden Produkte ermittelt worden ist.

9. Einrichtung nach Anspruch 8, mit in der Verkaufsanlage angeordneten Erfassungsmitteln (54, 55) zum Erfassen von an ausgewählten Orten der Verkaufsanlage herrschenden Bedingungen wie momentane Kundendichte oder Geräuschpegel und zur Übermittlung dieser Daten an die Datenverarbeitungsanlage (41).

10. Einrichtung nach Anspruch 8 oder 9, mit in Einkaufswägen (11), Einkaufskörbe oder dgl. integrierten, technisch lesbaren Kennzeichnungsorganen wie beispielsweise Transpondern zur zeitweisen individualisierenden Kennzeichnung von diese beim Einkauf benutzenden Kunden.

11. Einrichtung nach Anspruch 10, mit an ausgewählten Stellen der Verkaufsanlage angeordneten Mitteln zum Auslesen der individualisierenden Kennzeichnung von Kunden und zur Steuerung des Auslösens von Werbebotschaften in Abhängigkeit davon zur individualisierenden Kundenansprache.

12. Einrichtung nach einem der Ansprüche 8 bis 11, wobei die Datenverarbeitungsanlage (41) einer Mehrzahl von Verkaufsanlagen zugeordnet ist, um das Sammeln und Auswerten von Daten aus mehreren Verkaufsanlagen zentral vorzunehmen und die Ausgabe von Werbebotschaften in den mehreren Verkaufsanlagen zentral zu steuern.

13. Einrichtung nach einem der Ansprüche 8 bis 12, wobei die Erfassungsmittel zur Erfassung von Randbedingungsdaten innerhalb und/oder außerhalb der Verkaufsanlage angeordnete Meßgeräte und /oder Empfangsgeräte für extern übermittelte Daten sind.

14. Einrichtung nach einem der Ansprüche 8 bis 13, wobei die in der Verkaufsanlage angeordneten Ausgabemedien Lautsprecher, Video-Bildschirmgeräte, und/oder Beamer mit zugeordneten Bildwänden sind.

15. Einrichtung nach einem der Ansprüche 8 bis 14, wobei die Mittel zum Sammeln, Speichern und Kontrollieren der Produktverkaufsdaten mit zugeordneten Randbedingungsdaten in der Datenverarbeitungsanlage (41) die ermittelten optimalen Randbedingungsdaten zum Verkauf eines durch dieses Produkt betreffende Werbebotschaften beworbenen Produkts durch Anreichern der gesammelten Datenmengen über längere Zeiträume und deren Auswertung kontinuierlich verfeinern.
